**Europäisches Patentamt**

**European Patent Office**

**Office européen des brevets**

(19)

(11) Publication number: **0 034 938**

**A2**

(12) # EUROPEAN PATENT APPLICATION

(21) Application number: **81300740.8**

(22) Date of filing: **23.02.81**

(51) Int. Cl.³: **G 11 B 5/58**
**G 11 B 21/10**
**//G11B5/55**

(30) Priority: **22.02.80 US 123501**

(43) Date of publication of application:
**02.09.81 Bulletin 81/35**

(84) Designated Contracting States:
**DE FR IT NL**

(71) Applicant: **NORTHERN TELECOM INC.**
**2 International Plaza**
**Nashville Tennessee(US)**

(72) Inventor: **Oliver, Theodore Arthur**
**736 Honey Creek Drive**
**Ann Arbor Michigan(US)**

(74) Representative: **Robinson, Anthony John**
**Metcalf et al,**
**Kilburn & Strode 30 John Street**
**London, WC1N 2DD(GB)**

(54) A servo system and method for positioning a read/write transducer relative to a storage medium and a recording medium for use in such a system and method.

(57) An embodded servo track following system and method for positioning a transducer (10) relative to a storage medium (13) to read and write data on the medium such as a magnetic disc. The system includes positioning means (15) energizable for moving the transducer to preselected recording positions relative to the storage medium. A plurality of side-by-side closely spaced alternately arranged odd and even servo tracks are embedded or recorded on the medium such that a pair of the odd and even servo tracks identifies a preselected position or informational data track on the medium therebetween. Each of the odd and even tracks generates a waveform having a net DC component. The DC component of the odd and even tracks are equal in magnitude but opposite in polarity such that the DC components of the odd and even tracks cancel each other when the transducer is disposed therebetween. Servo control circuit means is provided for sensing the output of the transducer and selectively energizing the positioning means to null the output of the transducer and thereby centre the transducer between a preselected odd and even track pair (e.g. on line 36).

./...

EP 0 034 938 A2

FIG 1

| SERVO DATA 30 | INFORMATIONAL DATA 31 | |
|---|---|---|
| ODD (1) | ODD (1) | 36 |
| EVEN(2) | EVEN (2) | 37 |
| ODD (3) | ODD (3) | |
| EVEN(4) | EVEN (4) | |
| ODD (5) | ODD (5) | |
| EVEN (6) | EVEN (6) | |
| ODD (7) | ODD (7) | |
| EVEN (8) | EVEN (8) | |
| ODD (9) | | |

FIG 3

35

1.

## A SERVO SYSTEM AND METHOD FOR POSITIONING A READ/WRITE TRANSDUCER RELATIVE TO A STORAGE MEDIUM AND A RECORDING MEDIUM FOR USE IN SUCH A SYSTEM AND METHOD

The invention relates generally to the definition of a number of data tracks on a recording medium. In particular, the invention relates to the definition of a plurality of concentric data tracks on a magnetic disc and the accessing of these data tracks through the use of a servo control system.

Record discs are commonly used for storing data in computers and other data processing systems. Such record discs are provided on both faces with a layer of magnetizable material for recording data in the form of a plurality of concentric tracks. Some disc systems or disc files as they are frequently called, include a plurality of such record discs stacked on a common spindle and driven by a common drive whereas others include only one record disc. The discs are rotated at a constant speed and transducers or heads capable of either reading or writing data on the discs are flown over the disc surfaces on an air film. Although there are a large number of tracks on each disc surface, generally only one or two read/write heads are provided for each disc surface. Thus, the transducers or heads must be translatable across the surface of the discs and must include means for very accurately positioning or aligning the heads with a preselected data track. Addressing data stored on the disc is accomplished by means for selecting a read/write head, specifying the track position and specifying the segment or sector of the track to be accessed.

The velocity and position of a read/write head positioner is controlled by a servo control circuit. The read/ write heads associated with each surface of each disc are generally positioned in unison by a single positioner. Once properly positioned to the addressed track, data transferred to or from the track is effected upon selecting the head associated with the specific disc surface bearing the track to be accessed.

The art of digital recording on a magnetic disc has advanced to the point where data is being recorded in ever increasing densities on the magnetic disc surfaces. There are a number of approaches which have been taken in compacting the data on a magnetic disc. One approach has been to devise novel digital coding techniques which increase the information content in each magnetic recording on the disc. Another approach has been to increase the number of concentric data tracks on a disc surface to the point where the tracks are very densely packed. This latter approach has led to the development of increasingly sophisticated servo systems that are capable of successively positioning a transducer or head in closely spaced increments over a magnetic disc. The very earliest track following servo systems actually did not follow the data tracks. In these earliest systems, position signals were derived from position transducers which were independent from the read/write heads. For example, often an optical pickup was used to generate a position signal as an arm carrying the read/write heads radially traversed the disc. The optical transducer followed a dedicated servo surface on one of the discs which included the optically coded information necessary to hold the read/write heads over data tracks whose position was determined by the optical position sensing system. Next, the optical system was replaced with a magnetic system employing a disc having a dedicated servo surface and a dedicated track following head. In these systems, position information was magnetically recorded on a dedicated servo surface and read by a magnetic recording head separate from the read/write heads and generally referred to as a servo head. As positioning systems further progressed, various schemes for putting the data on the dedicated servo surface were used to increase track densities. All of these earlier positioning systems are referred to as continuous data track following systems since position information is always continuously available from the dedicated servo head. However, these prior art continuous data track following systems were far from optimum track following systems since these systems did not actually follow the data track that they were intended to read. As the distance between data tracks became closer and closer, variations in the relative positions of the separate read/write heads and servo heads became much more significant. Eventually changes in the relative position of these transducers due to thermal effects or other purely mechanical problems became the factors limiting track densities in prior art continuous data track following systems.

Other continuous data track following servo systems have employed a special recording medium having overlapping magnetizable layers with different coercivities.

A natural breaking point in the development of disc track following systems occurred with the development of sample data track following systems. Sample data track following systems attempt to follow the actual data track that is being read with the read/write head. This is generally accomplished by interposing bursts of servo control data between sectors on the recording media containing the informational data which is being read or written. However, many previous sample data systems did not give up the older continuous data type positioning system. In other words, both the older continuous data system and the newer sample data system are used to control the read/write heads. Typically, an optical pickup or a dedicated servo surface and dedicated servo head are used to coarsely adjust the read/write head and a sample data system is employed to finely adjust the read/write head, the servo information for the sample data system coming directly from the track that is being read by the read/write head. Problems with this type of track following system are related to its cost and complexity and the manner in which servo data is coded on the magnetic disc.

As interest increased in embedded servo track following systems, a variety of schemes such as "di bit", "tri bit", "quad bit" and variations thereof developed for recording servo data on a recording medium that is later read by the read/write head, along with the data being read or recorded, to create a position signal. While some of these sample data systems eliminate the dedicated servo surface and dedicated servo head previously necessary for coarse positioning of the read/write head, most of these prior art sample data techniques record servo data with an amplitude sensitive scheme. Amplitude demodulation of servo data presents several problems all related to the fact that in an amplitude modulated system an automatic gain control (AGC) or equivalent circuitry is required. In amplitude modulated systems, the first pulses of the servo data must be used to normalize the signal. In the stream of servo data, the first pulses all appear at the same amplitude since they are recorded in adjacent tracks in the same direction. Sets of these sequential pulses are recorded differently on adjacent servo data tracks and the amplitude of a second set of pulses associated with an adjacent servo track is then compared to the first set of pulses to determine the radial position of the head relative to adjacent servo data tracks. The circuitry necessary for accomplishing these functions is quite different from the circuitry used to read the informational data stream. Thus, a not insubstantial amount of additional circuitry is required to demodulate the position signal. Furthermore, a significant number of pulses are required for the AGC to determine an average pulse and this substantially increases the overhead of the system, or the amount of the recording media on the disc dedicated to the servo data.

The principal exception to amplitude modulated sample data systems involves the use of adjacent servo tracks which generate waveforms of different frequencies. In this case control circuitry is provided to frequency demodulate the signals generated by adjacent servo data tracks, generate a difference signal when the modulated signal and each servo waveform signal are multiplied and then detect the amplitude of each different signal, thereby sensing the relative position of the transducer and the data track. However, these techniques also require substantial circuitry of a different type from the circuitry normally used to read the data stream from the read/write head and require a substantial overhead. In most prior art sample data track following servo systems at least 15 percent of the disc surface is dedicated to servo data.

According to one aspect of the present invention, a servo system for positioning a read/write transducer relative to a storage medium to read data stored in any of a plurality of adjacent recording tracks on the medium comprises: positioning means energizable to move the read/write transducer in variable amounts of motion relative to the storage medium so as to align the transducer with any selected one of the different recording tracks on the storage medium; drive means for providing relative movement between the storage medium and the read/write transducer thereby enabling the transfer of data between the medium and, with the transducer aligned with a given recording track, the read/write transducer at the position of that recording track; a plurality of laterally aligned, closely-spaced, alternately arranged, odd and even servo tracks recorded on the medium with one such servo track disposed between each of said recording tracks, such that any two such alternating odd and even servo tracks on opposite sides of any given recording track denote the position of that recording track on the medium, each of said odd and even servo tracks when transduced generating a waveform having a net DC component, the DC components of said odd and even servo tracks being equal in magnitude but opposite in polarity whereby said DC components of an adjacent pair of said odd and even servo tracks counterbalance each other when the read/write transducer is directly aligned with the recording track therebetween; servo control means for sensing the output of the read/write transducer and continuously selectively energizing said positioning means to null the output of said read/write transducer and thereby centre the same upon the recording track disposed between said odd and even servo tracks. Since the servo data is coded into the spacing or timing and order of the transitions there is no need for an average pulse determination. This eliminates the necessity of an AGC or equivalent circuitry and substantially reduces overhead since the servo data sectors need not contain large pulse trains necessary for the pulse averaging. Other advantages of the invention are referred to at various points in the following description of a specific embodiment.

According to a second aspect of the present invention, a recording medium for use in an embedded servo track system that positions a read/write transducer to read data stored on the medium has a plurality of defined informational data sectors and a plurality of recorded servo data sectors, said plurality of servo data sectors comprising a plurality of generally parallel, closely-spaced, alternately arranged, odd and even servo tracks recorded on the medium such that a laterally-adjacent pair of said servo tracks comprises one odd and one even servo track spaced apart sufficiently to define a preselected information track location on the medium therebetween, each of said odd and even tracks servo generating a waveform having a net DC component, said DC components of any pair of odd.and even such tracks being equal in magnitude but opposite in polarity whereby said DC components of any two adjacent odd and even servo tracks will counterbalance each other when the read/write transducer is centred therebetween.

According to a third aspect of the present invention, a method for positioning a read/write transducer relative to a storage medium to read data stored in recording tracks on the medium comprises the steps of: driving the storage medium to provide relative movement between the storage medium and the read/write transducer thereby enabling the transfer of data between the medium and the transducer; using pairs of generally parallel odd and even servo tracks recorded on the medium.to continuously control the position of the read/write transducer and maintain it in alignment with a desired such recording track disposed between an odd and an even servo track comprising a pair thereof, each of said odd and even servo tracks representing a waveform having a net DC component, any pair of DC

9.

components of said odd and even servo tracks being equal in magnitude but opposite in polarity whereby said DC components of a pair of said odd and even servo tracks offset each other when the read/write transducer is centred therebetween; continuously sensing the output of the read/write transducer to monitor servo track data; and continuously positioning the read/write transducer to seek a null of the monitored servo track output of the transducer thus centering the transducer on the recording track located between odd and even servo tracks.

The invention may be carried into practice in various ways but there will now be described by way of example a servo system embodying the invention, a recording medium for use in the servo system and a method of positioning a read/write transducer relative to the storage medium and using the servo system. The description is with reference to the accompanying drawings, in which:

Figure 1 is a functional diagram of the servo control system;

Figure 2 is a partial plan view of a recording medium including servo data and informational data arranged according to the teachings of the present invention;

Figure 3 is an enlarged view of a section of a servo data track constructed according to the present invention;

Figure 4(a) is a schematic representation of the transitions in the recording medium of an odd servo data track written according to the present invention;

Figure 4(b) is a schematic representation of the transitions in the recording medium of an even servo data track written according to the present invention;

Figure 5(a) is a plot of the waveform generated by an odd servo data track of the present invention;

Figure 5(b) is a plot of a waveform generated by an even servo data track of the present invention; and

Figure 6 is a plot of the demodulated position signal generated by the track following servo control system of the present invention.

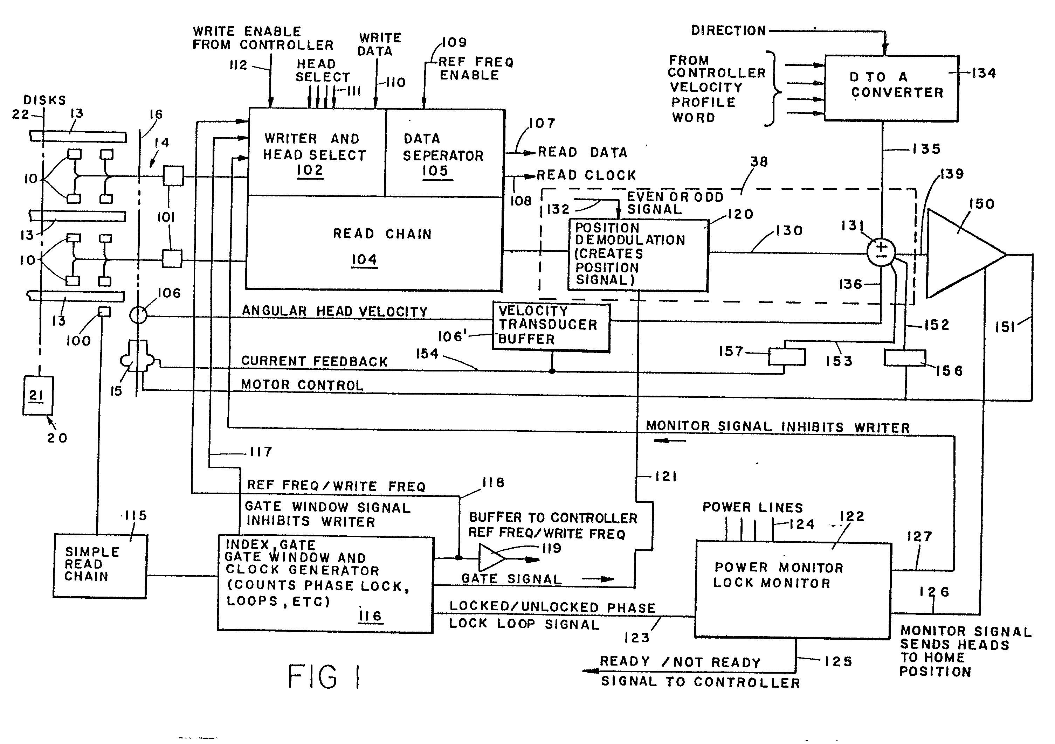

Referring briefly now to Figure 1, a servo system for positioning a plurality of read/write heads 10 relative to a storage medium such as a plurality of discs 13 is illustrated. The discs 13 are provided with a magnetizable medium disposed on the surfaces thereof such that data may be recorded and retrieved therefrom with the heads 10 in a conventional manner. Data is stored on the surface of the discs 13 in a plurality of concentric data tracks. Positioning means 14 is provided which is energizable for moving the read/write heads 10 to preselected recording positions or tracks on the discs 13. The positioning means 14 comprises a torque motor 15 which radially pivots a plurality of arms, not illustrated herein, about the axis 16. The radially pivoting arms support the read/write heads 10 adjacent the surfaces of the discs 13 where the read/write heads "fly" on a thin film of air when the discs 13 are rotated. Drive means 20 is provided to create relative movement between the discs 13 and the read/write heads 10 thereby enabling the transfer of data between the magnetic storage medium and the heads in a conventional manner. The drive means in this case comprises a direct drive motor 21 which spins the discs 13 about a central axis 22.

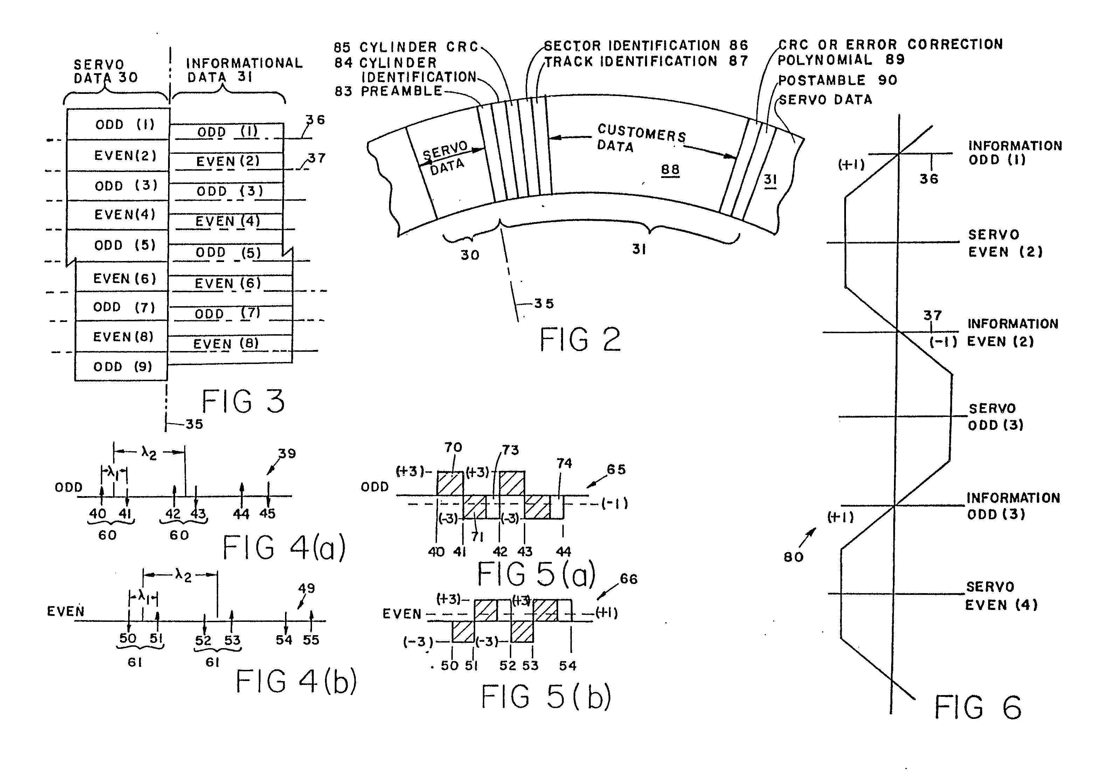

Referring now to Figure 2, a section of one of the surfaces of the discs 13 is illustrated. Data carried on the surfaces of the disc 13 is arranged in a plurality of concentric tracks comprising alternate sectors of servo data 30 and informational data 31. The servo data sectors and informational data sectors are alternately arranged truncated pie-shaped sectors which together make up the annular array of data tracks previously referred to. In Figure 2 the servo data sectors are shown for the purposes of illustration as having a size much greater than the actual size of the servo data sectors. In fact the servo data sectors constructed according to the present invention may be small enough to present an overhead of only approximately 2 percent.

With reference now to Figure 3, which illustrates a greatly magnified section of the interface 35 disposed between servo data sectors 30 and informational data sectors 31, it is illustrated that the servo data sectors 30 comprise a plurality of side-by-side, closely spaced alternately arranged, odd and even servo data tracks (1) to (9). The odd and even servo tracks are alternately arranged such that pairs of odd and even servo tracks define a preselected position on the recording medium therebetween. Thus, for example, the pair of concentric servo tracks odd (1) and even (2) define a circular centreline 36 therebetween which becomes the centreline of informational data track odd (1). In a similar manner, the servo tracks even (2) and odd (3) define the informational data track even (2) which is centered on the line 37 extending therebetween. It should be understood that although the servo data tracks and informational data tracks are illustrated herein as being disposed in abutting side-by-side relationship, in most cases, some spacing will be present between adjacent tracks. That is, adjacent tracks are likely to be separated by a small zone in the recording media that contains no pre-recording information. Each of the odd and even servo data tracks generates a waveform in a read/write head 10 which can be demodulated to present a net DC component. The DC components of the odd and even tracks are equal in magnitude but opposite in polarity such that the DC components of the odd and even tracks cancel each other when the read/write heads 10 are disposed therebetween, such as when one of the transducers 10 is centered on the line 36 or 37. Thus, by nulling the output of the read/write heads over the servo data sectors 30, the heads 10 may be very precisely centered on the informational data track disposed in the sectors 31. Referring back now briefly to Figure 1, a servo control means generally indicated by the numeral 38 is provided for sensing the output of the transducers 10 over the servo data sectors 30 and selectively energizing the positioning means 14 to accurately null the output of the read/write heads 10 and centre the same on preselected tracks disposed in the informational data sectors 31.

With reference now to Figures 4(a) and (b) illustrating odd and even servo tracks, respectively, net positive and net negative DC signals are encoded on adjacent servo tracks by adjusting the order or direction and the timing of transitions in the recording media. A transition is herein defined as a change in the polarization of the recording media from north to south or south to north. Order herein refers to whether the transition is a transition from north to south or from south to north. North to south transitions are said to have an opposite order from south to north transitions and similarly, south to north transitions are said to have an opposite order from north to south transitions. The timing of the transitions refers to the spacing between adjacent transitions and is related to the frequency at which the transitions are written on the recording media. Referring now specifically to Figure 4(a), a representative odd servo track 39 is illustrated. Each of the oppositely directed arrows 40 to 45 represents a transition in the recording media. As the gap of an electromagnetic transducer or head travels over the odd servo track 39, first flux is induced in the head gap in one direction and then, as it passes a transition, flux is induced in the head gap in another direction. The way in which flux is oriented in adjacent zones of the servo data track determines the direction or order of the transition. An even servo track 49 constructed according to the present invention is illustrated in Figure 4(b). Even servo tracks are written with transitions 50 to 55 having the same spacing or frequency as the transitions of the odd servo track except that the order or direction of the transitions is identically opposite. That is, the order of the transitions of the even servo track 49 is inverted with respect to the order of the transitions of the odd servo track 39. The spacing or frequency of the transitions is identical, and although 180° phase shift between the odd and even servo tracks is preferred, a large phase error between the servo data tracks can be tolerated. It should be noted that the phasing of adjacent servo tracks in prior art amplitude sensitive schemes is critical to the success of these schemes. Since it is difficult to precisely phase a plurality of adjacent, very densely packed servo tracks, the present invention greatly reduces the complexity of writing servo data.

As illustrated in Figures 4(a) and 4(b), each of the odd and even tracks 39 and 49, respectively, comprises an array of equally spaced transition pairs 60 and 61, respectively. Each of the transition pairs 60 or 61 comprises first and second equally spaced and oppositely directed transitions. The transition pairs 60 disposed in the odd track 39 are each provided with an identical order. That is to say, the order of transition pairs 40-41, 42-43 and 44-45 is identical. However, the order of the transition pairs 61 of even track 49 is identically opposite of the order of the transition pairs 60 of the odd track 39. Thus, although the transition pairs 50-51, 52-53 and 54-55 all are provided with an identical order; that order is identically opposite to the order of the transition pairs 60 of the odd track 39. The spacing $\lambda_1$ of the transitions comprising the transition pairs 60 and 61 is equal. The spacing $\lambda_2$ between transition pairs 60 and 61 is equal and larger than the spacing $\lambda_1$. The spacing $\lambda_1$ and $\lambda_2$ are actually representative of the two frequencies at which the transitions are written in the odd and even servo tracks. $\lambda_1$ may be regarded as the basic frequency of the transitions appearing in the servo tracks and $\lambda_2$ may be regarded as a beating frequency that is impressed thereon. $\lambda_1$ is provided with a definite predetermined relationship with regard to $\lambda_2$ since it is the relationship of $\lambda_1$ to $\lambda_2$, in addition to the order of the transitions, that creates the desirable DC components of the odd and even servo tracks.

With reference now also to Figures 5(a) and 5(b), the decoding of the odd and even servo tracks 39 and 49 into waveforms 65 and 66 having net negative and net positive DC components, respectively, is illustrated. The output of the odd and even servo tracks is inputted into a comparator disposed within the servo control circuitry 38 of Figure 1. The comparator may be any one of a number of commercially available circuits designed for use with the power level and servo data frequency rates chosen. The output of the comparator can be positioned at any desirable value. However, for the sake of illustration, in this case the comparator output is set to +3 or -3. In this case, if a net DC output of +1 or -1 is desired, the relationship of $\lambda_1$ to $\lambda_2$ is that $3\lambda_1$ equals $\lambda_2$, or $\lambda_1$ is to $\lambda^2$ as 3:1. With specific reference now to the odd track 39 and the waveform 65 generated thereby, the first transition 40 sets the comparator output at +3. The second transition 41 of the transition pair 60 sets the output of the comparator to -3. The mean value of the excursion or the output of the comparator is zero. Note that this is the first time that an amplitude or a reference voltage is required, and of course the output of the comparator may be placed at any desirable level. All the comparator senses at its input is the direction and timing of the transitions and because the spacing $\lambda_2$ between the transition pairs 60 is greater than the spacing $\lambda_1$ between the transitions 40 and 41, the waveform 65 generated by the odd data track 39 will have a negative DC component. More specifically, it is illustrated that the area 70 created by the excursion or output of the comparator between transitions 40 and 41 is equal to and is cancelled by the area 71 disposed between the transitions 41 and 42 of adjacent transition pairs 60. However, since $\lambda_2$, the spacing between the transition pairs 60, is three times $\lambda_1$, the spacing between the transitions themselves, a net negative area 73 remains before the output of the comparator returns to +3 at transition 42. In a similar manner, transitions 42, 43 and 44 create a net negative area at 74. When filtered the negative areas 73 and 74 produce a net negative output of 1.

With specific reference now to Figures 4(b) and 5(b), it is illustrated that the even track 49 similarly generates a waveform 66 having a net DC component of +1 in the case where $\lambda_2$ equals three times $\lambda_1$, the output of the comparator is set at +3 and -3 and the order of the transitions of transition pairs 61 is identically opposite to the order of the transition pairs 60 of the odd track 39. Thus, if either of the waveforms generated by the odd or even servo data tracks is filtered, a net plus or minus DC value will be measured purely because of the timing and order of the transitions of the odd and even servo data tracks. The only requirements are that the output of the comparator is stable and the timing and direction of the transitions is correct. Since the amplitude of the waveform generated by the transitions no longer carries servo control data, the demodulating circuitry required to generate the waveforms 65 and 66 is substantially reduced over that required in prior art servo data writing schemes. Specifically, an automatic gain control circuit (AGC) is no longer required. This eliminates problems heretofore encountered in the prior art with unstable control circuitry and variations in amplitude created by problems in the servo writer's circuitry and recording medias having a nonuniform response. Elimination of the AGC also improves the time response of the servo control system and reduces its overhead since an AGC needs time to set up and it requires a substantial number of pulses to determine an average pulse amplitude. On the other hand if the transitions contained in the servo data sectors of the present invention are written with frequencies similar to that normally encountered in the informational data stream of the read/write heads much of the same circuitry is used to process both informational data and servo data. In fact both of the odd and even servo tracks of the present invention may be written in conventional modified frequency modulated code (MFM) as a 110110110... data pattern.

Thus, if the gap of the read/write head is precisely centered over an odd servo track, a position signal of -1 is generated. If the read/write head is precisely centered over an even servo track, a position signal of +1 is generated. The next consideration is the signal resulting as the read/write head radially traverses adjacent odd and even servo tracks. With reference to Figure 6, a waveform 80 is illustrated that represents an ideal demodulated position signal generated by a read/write head 10 radially traversing a servo data sector 30 (with slow constant radial motion) containing the aforementioned odd and even servo data tracks. With reference now also to Figure 3, when the read/write head is precisely centered over servo track even (2), the output of the head is +1. However, as the head is radially traversed toward the servo track odd (3), the output of the read/write head will diminish until the output of the head is nulled on the line 37 defining the interface between servo data tracks even (2) and odd (3) and the precise centre of informational track even (2). Thereafter, as the read/write head continues to radially traverse towards servo track odd (3), the output of the head gradually increases until a -1 value is reached when the read/write head is precisely centered over the servo track odd (3). Thereafter, as the read/write head continues to radially traverse over subsequent odd and even servo data tracks, the output of the head will periodically null defining either an odd or even informational data track. The signal illustrated in Figure 6 is the demodulated position signal of the track following system of the present invention in the ideal case. Ideally, the signal is trapezoidal in nature and is formed from a plurality of linear segments. Actually, the signal is more rounded with the most linear portions of the demodulated position signal centred over the servo data tracks or informational data tracks. That is to say, the transitions between servo and informational data signals of the demodulated position signal are likely to be rounded somewhat due to the phasing of the odd and even servo data tracks and head geometry. The gap of the read/write head effectively varies according to the flying height of the head and since the relative velocity of the head with respect to the recording surface varies as the head is radially traversed across the disc the effective gap width of the head varies. The demodulated position signal is most likely to have a generally sinusoidal pattern varying from -1 to +1 when the head is precisely centered over an odd or even servo data track, respectively, with the output of the read/write head being nulled precisely over the informational data tracks disposed therebetween.

If the servo data is written with the same head or transducer that the data is to be read with, a small gap is created between the odd and even servo tracks. Although this gap may be eliminated by what is known in the art as double-step servo data writing, it has been found to be preferable to leave this small gap created between adjacent odd and even tracks. These gaps do not affect the operation of the servo control system and any method of eliminating the gaps needlessly complicates the writing of the servo data.

Although the phasing of adjacent odd and even servo data tracks is not critical, adjacent servo data tracks preferably are approximately 180° out of phase. If adjacent odd and even servo data tracks are not so phased, the slope of the position signal 80 is not altered in the vicinity of the informational data tracks but rather will change somewhat in the area between adjacent servo data and informational data tracks. If adjacent odd and even servo data tracks are not provided with a 180° phase difference, the demodulated position signal will become somewhat more rounded and sinusoidal rather than having the trapezoidal shape illustrated in Figure 6. That is to say adjacent odd and even tracks having a 180° phase difference create a much more academic or ideal position signal. However, inaccuracy in the phasing of the servo data tracks does not substantially impair or reduce the accuracy of the demodulated position signal.

The present system also differs from prior art track following systems in that track identification information is not recorded with the servo data. The only information which the present system derives from the servo data bursts is the position signal. With reference now again to Figure 2, the servo data sectors are indicated by the numeral 30 and the informational data sectors are indicated by the numeral 31. After each servo data sector 30 an informational data sector 31 is encountered. At the beginning of the informational data sector 31, a preamble is encountered at 83 and a cylinder identification is encountered at 84. Cylinder identification is referred to since if the machine is provided with multiple heads, all of the heads are said to be on the same cylinder. Each head produces a track such that if there are eight heads there are eight tracks per cylinder, all of the tracks in each cylinder not necessarily being disposed geometrically one above the other. That is, the read/write heads in the same cylinder may be displaced axially on different disc surfaces or may be displaced radially on a single disc surface. In fact, it is quite common for more than one read/write head to be positioned on each surface of the discs. The cylinder identifications are read through the informational data channel and to identify the position of the heads it is necessary to read the informational data channel and determine which cylinder the heads are disposed in. Thus, it is always necessary to read the first portion of the informational data sector. Although the remainder of the informational data sector is not important when the heads are radially traversing the disc, even when the heads are on the fly between different radial positions on the disc, it is possible to frequently read this portion of the informational data sector.

The preamble 83 is simply a uniform signal designed to set up the system electronically for reading data. For example, the preamble 43 is generally a string of uniform pulses written at a single frequency. After the cylinder identification 84, a cylinder CRC is disposed at 85. The cylinder CRC is a data check. Often cylinder CRCs involve reading a first set of data and then comparing it to a second set of data that is a function of the first set of data. If after reading the cylinder identification and the cylinder CRC it is determined that the cylinder identification has been read correctly for the purposes of positioning the remainder of the informational data sector has no function. The remainder of the informational data sector includes a sector identification 86, a track identification 87 and the customer's data that is to be read or written at 88. At the end of the customer's data 88, another CRC is disposed at 89. The CRC 89 is generally an error correction polynomial and the informational data sector is ended with a postamble at 90. The postamble 90 is a high frequency pulse train leading into the next servo data sector 31. The purpose of the postamble 90 is to use up space at the end of the informational data sector 31 for the purpose of margining. A small margining area is always required as a safety factor to insure that none of the customer's data recorded in the informational data sector at 88 is lost for lack of room.

The servo data sectors 30 are automatically protected electronically by gating circuitry. When the read/write heads are rapidly traversing the disc radially, the demodulated position signal is not continuous since the heads move quite rapidly at full speed. Thus, when the heads are on the fly between different radial positions on the disc, the position signal is discontinuous average zero and the heads are moved according to a velocity profile specified by a controller. This velocity profile is updated each time the servo control system successfully reads a cylinder identification. Although the frequency of success in reading the cylinder identification decreases as the velocity increases, every time the system is successful at reading a cylinder identification at high speed, the accurate positioning of the heads is greatly facilitated. This of course also increases the indexing speed of the heads.

The servo control system also includes a clock for writing and indexing. One approach involves turning the discs at a constant speed and employing an absolute clock. Another technique involves less stringent control over the speed of the discs and provision of an actual clock that follows or tracks the speed of the discs. This latter approach is preferable and there are a number of approaches for generating a clock that actually tracks the disc rotational speed. One such approach is to use the missing pulse technique described in United States Patent No. 4,146,910 entitled COMBINED SPEED CONTROL AND SECTORING INDEX FOR DISC RECORDERS AND THE LIKE.

Taking the approach disclosed in the aforementioned patent, an actual clock may be created with an optical pulse wheel having 243 holes evenly spaced on 240 spaces. That is, 240 evenly spaced apertured sectors are provided with one sector having a missing aperture. The one missing aperture provides a radial index and the

24.

system is phase lock looped to the 240 spacing to provide a clock. Thereafter, sector locations, gate window signals and indexing signals may be counted off.

With reference now to Figure 1, the preferred technique for generating an actual clock involves use of a single fixed magnetic head 100. The fixed head or clock head 100 tracks a portion of one of the surfaces of the disc 13 that is not tracked by the displaceable read/write heads 10. The fixed magnetic head 100 produces a pulse train similar to that of the optical pickup previously disclosed except that the transducer senses a clock track stored on the magnetic medium carried by the discs 13. In this case, instead of leaving out an aperture, the equivalent of two apertures or two pulses is provided for radially indexing the clock track. That is, a clock track is provided comprising an array of evenly spaced pulses with the exception that in one radial position on the clock track two additional transitions are provided generating an additional pulse. In the present case, 53,760 +2 transitions are provided in the clock track.

When the servo writer records the servo data sectors 30, a clock track is required. This clock track may be used as a clock track for the servo control system of the present invention. The clock track has to have the correct number of transitions and has to have an accurate closure. Servo writers generate the clock track by trial and error until a closed clock track, meeting certain specifications, is provided. Using the fixed head 100 and the servo writer's clock track, gate and gate window signals may be generated by the servo control system of the present invention. For the sake of illustration, assuming that 60 equally spaced sectors are provided with 53,760 clock transitions per revolution, plus the two index transitions, there are 896 transitions per sector. In terms of periods, that is, 448 clock periods per sector in the case where 60 servo data and informational data sectors are provided of equal size.

Each servo data sector 30 is protected by two signals, a gate window and a gate signal. The servo data is written within the gate signals. The customer's data is bounded by the gate window signals. The gate window signals encompass the gate signals, and the gate signal actually enables the servo data. The area between the edges of the gate window signals and the gate signals provides a buffered area where nothing is written for margining purposes. In time, the position of the gate window signals may shift relative to the surface that is being tracked. However, providing a margin guarantees that good positioning information will always be recovered. The gate window signals are also used to turn off the writer. Any time that the read/write heads are within a gate window, the heads are within a servo sector 30. Any time the read/write heads 10 are outside of the gate window signals, they are over informational data sector 31. When there are 448 clock periods per sector, definition of the gate window and index signals is a matter of using countdown logic. If the disc is spun at 3,000 rpm, a clock frequency of 1.344 megacycles is provided. The clock necessary for writing data that is consistent with the type of head technology now available is 16.128 megacycles. The ratio of 16.128 to 1.344 is exactly 12.00. Therefore, to create a writing frequency or writing clock, it is necessary to phase lock loop the clock frequency generated by the fixed head 100 up to 16.128 megacycles divide by 12 and then compare back. The phase lock loop generates the writing frequency of 16.128 megacycles. Briefly then, the clock track generated by the fixed head 100 provides the gating signals that are necessary to find the servo data sectors 30 and actually serves as the reference by which the servo data sectors 30 are initially written. Furthermore, the clock track read by fixed head 100 produces a reference frequency that can be used to actually write the informational data contained in the informational data sectors 31. If the speed of the discs vary, the performance of the system does not suffer since the same number of transitions or clock periods are provided per revolution of the discs.

With specific reference to Figure 1, the block diagram of the servo control system of the present invention will be explained in greater detail. The number of discs 13 that the system will accommodate is variable. A number of read/write heads 10 may be associated with each disc 13. Amplifying circuits at 101 are disposed on the head frame and are connected to head select electronics 102, read chain 104, and data separator 105. A full array of read/write heads 10 pivots about an axis 16 on a swing arm, not illustrated herein. A torque motor 15 drives the swing arm to radially position heads 10 with respect to the discs 13. A velocity transducer 106 provides a measure of the velocity of the heads 10 as they radially traverse the discs 13.

All signals in the functional diagram of Figure 1 that are provided with arrows indicate signals passing through a natural interface. All of these signals are entirely digital in nature and control the device that they are inputted to in a unique fashion. The data separator 105 provides read data and read clock signals at 107 and 108, respectively, which are inputted to the controller. A reference frequency enable signal is inputted to the data separator 105 at 109. The reference frequency enable signal is received from the controller. When the data separator 105 is not active, for example when the heads 10 are disposed in a gate or over a servo sector, the reference frequency (inputted at 118) is used to keep the data separator primed for the reception of data. The writer and head select circuitry 102 receives write data, head select, and write enable signals from the controller at 110, 111 and 112, respectively.

The output of the clock head 100 is inputted to a simple read amplifier chain 115. The output of the read chain 115 is directed to a clock generator 116 that counts clock periods from a phase lock loop to generate the index gate and gate window signals. The gate window signal is inputted to the writer and head select circuitry 102 on line 117. The reference and write frequency is generated by the clock generator 116 and is inputted to the writer and head select circuitry 102 on line 118.
The reference and write frequency is also inputted to
the controller via a suitable buffer 119. The gate
signal is inputted to a position demodulation circuit
120 via line 121. A lock/unlock phase lock loop
signal is generated by the clock generator and transmitted to a power monitor and lock monitor 122 along
line 123. The power monitor and lock monitor compares
various signals in the servo control system to norms
to insure their correctness. Various power lines are
inputted to the power monitor and lock monitor at 124
and the power monitor and lock monitor generates a
ready/not ready signal inputted to the controller along
line 125. A monitor signal along line 126 sends the
heads 10 to home positions and a monitor signal along
line 127 inhibits the writer when power goes down or
the phase lock loop becomes unlocked.

The output of the read amplifier chain 104 is
directed to the servo control circuit 38 which includes
the position demodulation circuit 120. The position
demodulation circuit 120 also receives the gate signal
on line 121. The gate signals determine when the heads
10 are disposed above a servo data sector 30 on the discs
13 and enable the position demodulation circuit 120 to
demodulate the position information generated by the
read/write heads 10 and the servo data tracks 30. The
position demodulation circuit 120 is basically a comparator with the characteristics previously discussed with
respect to demodulation of the position signal. The
output of the position demodulation circuit 120 on line

0034938

29.

130 is the demodulated position signal 80 illustrated in Figure 6. The demodulated position signal is inputted on line 130 to a summing node 131. An odd or even signal is also inputted to the position demodulation circuit 120 on line 132. The odd or even signal determines whether the heads 10 are to be stabilized between odd and even servo data tracks or even and odd servo data tracks. A digital to analog converter 134 receives a velocity profile word from the controller and supplies the same to summing node 131 along line 135. The controller is preprogrammed to provide a velocity profile for the heads 10 when it is desired to move the heads 10 from one predetermined position to another. The velocity transducer 106 generates a velocity measure that is inputted to a buffer circuit at 106' the output of which is inputted to the summing node 131 along line 136. The summing node 131 compares the velocity word or velocity command from the controller to the velocity measure generated by the velocity transducer buffer circuit 106', the error is amplified by the amplifier 150 which provides current on line 151 to drive the torque motor 15 and appropriately index the heads 10. The output of the position demodulator circuit 120 produces a maximum signal which is smaller than the least significant bit of the velocity profile word received from the digital to analog converter 134 and the velocity signal received from the buffer circuit 106'. Thus, whenever a control word or a velocity signal is present, these signals dominate the output of the summing node 131.

The circuit 150 is a high gain amplifier whose gain decreases as frequency increases and whose output on line 151 drives the torque motor 15. The amplifier 150 is suitably connected to the torque motor 15 in a manner that involves details of the servo control art that are not germane to the present invention. However, the summing node 131 also receives a motor voltage feedback signal and a motor current feedback signal on lines 152 and 153, respectively. The lines 152 and 153 are connected to motor control line 151 and current feedback line 154, respectively, via conditioning circuits 156 and 157, respectively. The conditioning circuits are compensation networks comprising conventional RC circuitry that becomes more conductive as frequency increases. At low frequencies the compensation networks are not conductive. However, as frequency increases the compensation networks become conductive to pass current and voltage feedback signals to summing node 131 to control the phase shift as the loop gain of the system approaches unity.

The odd or even signal received from the controller by the position demodulation circuit 120 along line 132 determines whether the servo control system stabilizes between odd or even servo tracks or vice versa. The system will stabilize under two possible conditions with an odd servo data track on the left, and an even servo data track on the right, or vice versa. Since the demodulated position signal is small relative to the size of the control word supplied by the digital to analogue converter, that is, the total excursion of the demodulated position signal is smaller than the least significant bit of the digital to analogue converter, any time that there is a command signal, the demodulated position signal is simply overpowered by the command word. However, when the command signal is reduced to zero, the demodulated position signal dominates the summing node 131 and the output on line 139 of summing node 131 is purely a function of the demodulated position signal. When the command signal is reduced to zero, the system automatically stabilizes between odd and even tracks or even and odd tracks according to the information supplied by the controller along line 132. The operation of the system can be analogized to an automobile driving along a washboard road. Whenever the automobile stops, it automatically comes to rest in a wash. In the present case, when the control word is reduced to zero, the system simply detents into position between the appropriate servo data tracks. More specifically, when the control word is reduced to zero, the system attempts to reduce either the velocity signal received on line 136, or the demodulated position signal received on line 130 to zero. The demodulated position signal can only be reduced to zero in one location between odd and even servo data tracks and identically centered over an informational data track so that once the control and the velocity words are reduced to zero, the system simply detents in place on the desired informational data track. Going back to the analogy of the vehicle on a washboard road, if it were possible to turn the washboard road upside down, this

32.

would duplicate the effect of the odd and even signal received from the controller on line 132, that is, changing the odd, even signal received on line 132 causes detenting on hills rather than valleys. The position demodulator circuit 120 only holds the value of the servo data sector between gates so that it acts as a sample and hold circuit sampling position between the gates and then holding it until the next set of gates. Thus, the position demodulator circuit 120 is dormant between gates. If the odd/even signal were changed, the system would immediately become unstable on the informational track that it is locked on and it would shift immediately to an adjacent informational data track.

33.

CLAIMS

1. A servo system for positioning a read/write transducer (10) relative to a storage medium (13) to read data stored in any of a plurality of adjacent recording tracks on the medium, said servo system comprising: positioning means (15) energizable to move the read/write transducer in variable amounts of motion relative to the storage medium so as to align the transducer with any selected one of the different recording tracks on the storage medium; drive means (21) for providing relative movement between the storage medium and the read/write transducer thereby enabling the transfer of data between the medium and, with the transducer aligned with a given recording track, the read/write transducer at the position of that recording track; a plurality of laterally aligned, closely-spaced, alternately arranged, odd and even servo tracks (30) recorded on the medium with one such servo track disposed between each of said recording tracks (31), such that any two such alternating odd and even servo tracks on opposite sides of any given recording track denote the position of that recording track on the medium, each of said odd and even servo tracks when transduced generating a waveform having a net DC component, the DC components of said odd and even servo tracks being equal in magnitude but opposite in polarity whereby said DC components of an adjacent pair of said odd and even servo tracks counterbalance each other when the read/write transducer is directly aligned with the recording track therebetween; servo control means (38, 150, 151) for sensing the output of the read/write transducer and con-

34.

tinuously selectively energizing said positioning means
to null the output of said read/write transducer and
thereby centre the same upon the recording track disposed between said odd and even servo tracks.

2. A servo system as claimed in Claim 1 in which
each of said odd and even servo tracks comprises a
serial array of transitions recorded on the recording
medium, the DC components of said odd and even servo
tracks being coded in the timing and order of the
transitions.

3. A servo system as claimed in Claim 1 in which
both of said odd and even servo tracks comprise a
110110110... MFM code.

4. A servo system as claimed in Claim 2 in which
each of said odd and even servo tracks comprises an
array of equally spaced transition pairs, each of said
transition pairs comprising first and second equally
spaced oppositely directed transitions, each of said
transition pairs disposed in said even servo track having
an identical order and each of said transition pairs
disposed in said odd servo track having an order iden-
tically opposite of the order of said transition pairs
disposed in said even servo track.

5. A servo system as claimed in Claim 4 in which
the spacing between said transitions of said tran-
sition pairs is $\lambda_1$ and the spacing between said transition
pairs is $\lambda_2$, $\lambda_2$ being greater in magnitude than $\lambda_1$.

6.    A servo system as claimed in any of the
preceding claims in which the odd and even servo tracks
are both provided with more than one frequency, the
same frequencies being used to write both of said odd
and even servo tracks.

7.    A servo system as claimed in Claim 6 in which
the odd and even servo tracks are both provided with
first and second frequencies having differing wavelengths,
said second frequency being impressed upon said first
frequency.

8.    A servo system as claimed in any of the
preceding claims in which the storage medium includes
a plurality of informational data sectors (31) and a
plurality of servo data sectors (30), said informational
data sectors and said servo data sectors being alternately spaced relative to the direction of motion
caused by said drive means.

9.    A servo system as claimed in Claim 8 which
includes means for generating gating signals defining the
positions of said plurality of informational data sectors
and said plurality of servo data sectors.

10.    A servo system as claimed in any of the
preceding claims in which the servo control means comprises a position-signal producing means connected to
the read/write transducer for producing a position signal
from the output of said transducer, and further including a velocity transducer for providing a velocity signal representative of the velocity of the read/write transducer as the read/write transducer is moved to different recording track positions by said positioning means.

11. A servo system as claimed in Claim 10 in which the servo control means further includes a summing means (131) for receiving said position signal (130), said velocity signal (136) and a velocity profile signal (135) from a controller, the least significant bit of said velocity profile signal being greater than the maximum value of said position signal whereby whenever said velocity profile signal is present said velocity profile signal dominates said position signal causing said summing means to energize said positioning means to move the read/write transducer to a predetermined position.

12. A recording medium for use in an embedded servo track system that positions a read/write transducer to read data stored on the medium, said recording medium having a plurality of defined informational data sectors (31) and a plurality of recorded servo data sectors (30), said plurality of servo data sectors comprising a plurality of generally parallel, closely-spaced, alternately arranged, odd and even servo tracks recorded on the medium such that a laterally-adjacent pair of said servo tracks comprises one odd and one even servo track spaced apart sufficiently to define a preselected information track location on the medium therebetween, each of said odd and even tracks servo generating a waveform having a net DC component, said DC components of any pair of odd and even such tracks being equal in magnitude but opposite

37.

in polarity whereby said DC components of any two adjacent
odd and even servo tracks will counterbalance each other
when the read/write transducer is centered therebetween.

13.   A method for positioning a read/write transducer relative to a storage medium to read data stored
in recording tracks on the medium, the method comprising
the steps of:  driving the storage medium to provide
relative movement between the storage medium and the
read/write transducer thereby enabling the transfer of
data between the medium and the transducer;  using
pairs of generally parallel odd and even servo tracks
recorded on the medium to continuously control the
position of the read/write transducer and maintain it
in alignment with a desired such recording track disposed between an odd and an even servo track comprising
a pair thereof, each of said odd and even servo tracks
representing a waveform having a net DC component, any
pair of DC components of said odd and even servo tracks
being equal in magnitude but opposite in polarity whereby
said DC components of a pair of said odd and even servo
tracks offset each other when the read/write transducer
is centered therebetween;  continuously sensing the
output of the read/write transducer to monitor servo track
data;  and continuously positioning the read/write
transducer to seek a null of the monitored servo track
output of the transducer thus centering the transducer
on the recording track located between odd and even servo
tracks.

14.  A method as claimed in Claim 13 in which both of said odd and even servo tracks comprise a serial array of transitions in the recording medium, the DC components of said odd and even servo tracks being coded in the timing and order of the transitions.

15.  A method as claimed in Claim 14 which includes the steps of:  providing alternately spaced informational data and servo data sectors on the recording medium; providing a cylinder identification in said informational data sectors;  and reading said cylinder identification on the fly when the read/write transducer is traversing the recording medium.

16.  A method as claimed in Claim 13 or Claim 14 or Claim 15 in which both of said odd and even servo tracks comprise a 110110110...MFM code.·

FIG 1

## FIG 3

| SERVO DATA 30 | INFORMATIONAL DATA 31 |
|---|---|
| ODD (1) | ODD (1) |
| EVEN(2) | EVEN (2) |
| ODD (3) | ODD (3) |
| EVEN(4) | EVEN (4) |
| ODD (5) | ODD (5) |
| EVEN (6) | EVEN (6) |
| ODD (7) | ODD (7) |
| EVEN (8) | EVEN (8) |
| ODD (9) | |

36

37

35

## FIG 2

85 CYLINDER CRC
84 CYLINDER IDENTIFICATION
83 PREAMBLE

SECTOR IDENTIFICATION 86
TRACK IDENTIFICATION 87

CRC OR ERROR CORRECTION POLYNOMIAL 89
POSTAMBLE 90
SERVO DATA

SERVO DATA

CUSTOMERS DATA

88

31

30

31

35

## FIG 4(a)

ODD

$\lambda_2$

$\lambda_1$

39

40  41     42  43     44  45

60       60

## FIG 4(b)

EVEN

$\lambda_2$

$\lambda_1$

49

50  51     52  53     54  55

61       61

## FIG 5(a)

ODD

70      73        74      65

(+3)    (+3)              (-1)

(-3)    (-3)

40  41   71  42  43   44

## FIG 5(b)

EVEN

(+3)    (+3)        66

(-3)    (-3)              (+1)

50  51   52  53   54

## FIG 6

(+1)        36        INFORMATION ODD (1)

SERVO EVEN (2)

37        INFORMATION
(-1)      EVEN (2)

SERVO ODD (3)

(+1)        INFORMATION ODD (3)

80

SERVO EVEN (4)

0034938